# EUROPÄISCHE PATENTSCHRIFT

(11) **EP 1 226 899 B1**
(45) Veröffentlichungstag und Bekanntmachung des Hinweises auf die Patenterteilung: **01.10.2003**
(21) Anmeldenummer: 01126645.9
(22) Anmeldetag: 08.11.2001
(51) Int. Cl.: B23Q 17/00, B23Q 17/20, B23Q 39/04, B23Q 3/18

(54) **Verfahren und Vorrichtung zur Bearbeitung von Werkstücken**
Method and device for machining workpieces
Procédé et dispositif pour l'usinage de pièces

(30) Priorität: 30.01.2001 DE 10103918; 01.06.2001 DE 10126900
(43) Veröffentlichungstag der Anmeldung: 31.07.2002
(73) Patentinhaber: Hüller Hille GmbH, 71636 Ludwigsburg (DE)
(72) Erfinder: Noss, Hans, 65307 Bad Schwalbach (DE); Kellert, Hans-Dieter, 65232 Taunusstein (DE)
(74) Vertreter: Dahlkamp, Heinrich-Leo, Dipl.-Ing.

(56) Entgegenhaltungen:
- DE-A- 4 316 166
- DE-A- 19 753 898

## Beschreibung

Die Erfindung bezieht sich auf ein Verfahren und eine Vorrichtung zur Bearbeitung von Werkstücken, insbesondere Bremsscheiben aus faserverstärkter Kohlenstoff-Silicium-Keramik oder anderen schwer zerspanbaren (insbesonderen spröden) Materialien. DE 19 753 898, z.B., offenbart eine Vorrichtung gemäss dem Oberbegriff des Anspruchs 4.

Zur Bearbeitung von metallischen Werkstücken sind automatisch gesteuerte Werkzeugmaschinen, auch als Drehmaschinen, im Gebrauch (DE 43 16 166 A1), bei denen Werkstücke nacheinander an zwei Stellen festgespannt und bearbeitet werden. Dabei wird ein Werkstück von einer ersten Spindel aufgenommen, in Bearbeitungsposition gefahren und danach zu einer zweiten Spindel zwecks Übergabe verbracht, wo eine weitere Bearbeitung erfolgt.

Gewisse Materialien, wie keramische Werkstoffe oder Verbundwerkstoffe aus unterschiedlichen Materialien, lassen sich bekanntlich nur schwer bearbeiten. Neben dem Schleifen solcher Materialien ist neuerdings das laserunterstützte Drehen (Zerspanen mit Drehmeißel) getreten (Zeitschrift "Maschine und Werkzeug" 9/99, Seite 54; Bericht des Aachener Demonstrationslabors für Integrierte Produktionstechnik über Hochleistungsdiodenlaser in der Produktion, Seminar am 18.-19. Mai 1999, Fraunhofer IPT Aachen).

Werkstücke weisen häufig unterschiedliche zu bearbeitende Flächen auf, was das Problem des Umspannens des Werkstücks zum Erreichen dieser unterschiedlichen zu bearbeitenden Flächen nach sich zieht. Ein weiteres Problem besteht darin, mit der Bearbeitung eine bestimmte Form des Werkstücks zu erzielen, die nicht nur durch die äußeren Abmessungen des Werkstücks, sondern auch durch Wandstärken bei teilweise nicht bearbeiteten Flächen definiert werden. Dieses Problem tritt beispielsweise bei Bremsscheiben auf, welche zu Kühlungszwecken umlaufende Aussparungen oder gebogene Nuten symmetrisch zu einer Toleranz-Bezugsebene aufweisen, wobei umlaufende Wände zwischen dieser Aussparung bzw. Nuten und den beiden Scheibenflächen der Bremsscheibe sich befinden. Die Dicke dieser Wände soll zu beiden Seiten der Aussparung bzw. der Nuten gleich sein, um gleiche Wärmespeicherkapazitäten darzustellen, so dass sich die Bremsscheibe im Betrieb symmetrisch aufheizt und sich möglichst wenig verzieht.

Der Erfindung liegt die Aufgabe zugrunde, ein Verfahren und eine Vorrichtung anzugeben, um schwer zerspanbare Bauteile wirkungsvoll und kostengünstig aus geformten Rohlingen herzustellen, denen eine Toleranz-Bezugsebene zugeordnet werden kann.

Die gestellte Aufgabe wird aufgrund des Verfahrens des Anspruchs 1 und der Vorrichtung des Anspruchs 4 gelöst und durch die weiteren Merkmale der abhängigen Ansprüche ausgestaltet und weiterentwickelt.

Erfindungsgemäß erhält die Werkzeugmaschine eine Messstation, um die Toleranz-Bezugsebene des Werkstücks relativ zu Koordinaten der Werkzeugmaschine festzustellen und das Werkstück dementsprechend auszurichten und an der ersten Spindel einzuspannen. Es wird eine bearbeitete Bezugsfläche an dem Werkstück geschaffen, um nach Umspannen des Werkstücks an der zweiten Spindel die Toleranzebene des Werkstücks weiterhin als Bezugsebene für weitere Bearbeitungen an dem Werkstück zur Verfügung zu stellen.

Die Erfindung beruht auch darauf, dass nicht alle Außenoberflächen eines Werkstücks bei einer einzigen Aufspannung zur Bearbeitung erreicht werden können und dass es Bearbeitungsformen gibt, die man besser mit einem Meissel auf einer Drehmaschine herstellen kann, während sich andere Formen durch Schleifen kostengünstiger herstellen lassen. Bei der Erfindung können beide Bearbeitungsmethoden miteinander kombiniert werden, wobei gleichzeitig zuvor hergestellte Rotationsflächen zum präzisen Aufspannen des Werkstücks zwecks Endbearbeitung durch Schleifen ausgenutzt werden. Dabei wird zunächst die Rohform des Werkstücks computermäßig erfasst, um die Toleranz-Mittellinie des Werkstücks zu ermitteln, und das Werkstück wird gewissermaßen mit den Koordinaten dieser Toleranz-Mittellinie von der ersten zur zweiten Aufspannung überreicht, so dass ein erneutes, kostspieliges Ausrichten bei der zweiten Aufspannung nicht mehr benötigt wird.

Zur Durchführung des Verfahrens wird eine in den Grundzügen bekannte Werkzeugmaschine verwendet (DE 43 16 166 A1), diese jedoch dahin gehend abgewandelt, dass eine Messeinrichtung zur Bestimmung von Abmessungen an dem Werkstück vorgesehen ist, um die Toleranz-Bezugsebene relativ zu einer Anschlagsfläche zu bestimmen und dem Rechner der Werkzeugmaschine mitzuteilen. Auf diese Weise ist es möglich, das Maß der Abtragung von dem Werkstück genau vorherzubestimmen und die Werkzeugmaschine dementsprechend zu steuern, so dass nach Bearbeitung gewissermaßen die korrekte äussere und innere Form des Werkstücks abgeliefert wird.

Die Erfindung macht sich auch die Technik des laserunterstützten Drehens zunutze, mit der gewisse herzustellende Werkstückformen ohne hoch spezifisches Werkzeug hergestellt werden kann. So weit es sich um einfache Formen handelt, beispielsweise zwei zueinander parallele Flächen, wird das altvertraute Schleifen eingesetzt, welches für diese Art der Bearbeitung von keramischen Werkstücken am wirtschaftlichsten ist.

Die Werkzeugmaschine wird zweckmäßigerweise als Automat ausgebildet, welche gleichzeitig zwei Werkstücke bearbeitet, und zwar wird ein teilweise bearbeitetes Werkstück von der ersten zur zweiten Spindel übertragen, während gleichzeitig ein Rohling zugeführt, ausgemessen und ausgerichtet wird, wonach dieser Rohling teilbearbeitet wird, während das zuvor teilbearbeitete Werkstück fertig bearbeitet und abgeführt wird.

Die Erfindung wird anhand der Zeichnung beschrieben. Dabei zeigt:
- Fig. 1: eine schematische Darstellung einer Vertikaldrehmaschine, von der Frontseite gesehen,
- Fig. 2: eine Draufsicht auf die Maschine der Fig. 1,
- Fig. 3: einen Ausschnitt entlang der Linie III-III in Fig. 1,
- Fig. 4: eine vergrößerte Einzelheit aus Fig. 1,
- Fig. 5: eine vergrößerte Einzelheit aus Fig. 3 und
- Fig. 6a bis 6i: diverse Stufen der Behandlung eines Werkstücks.

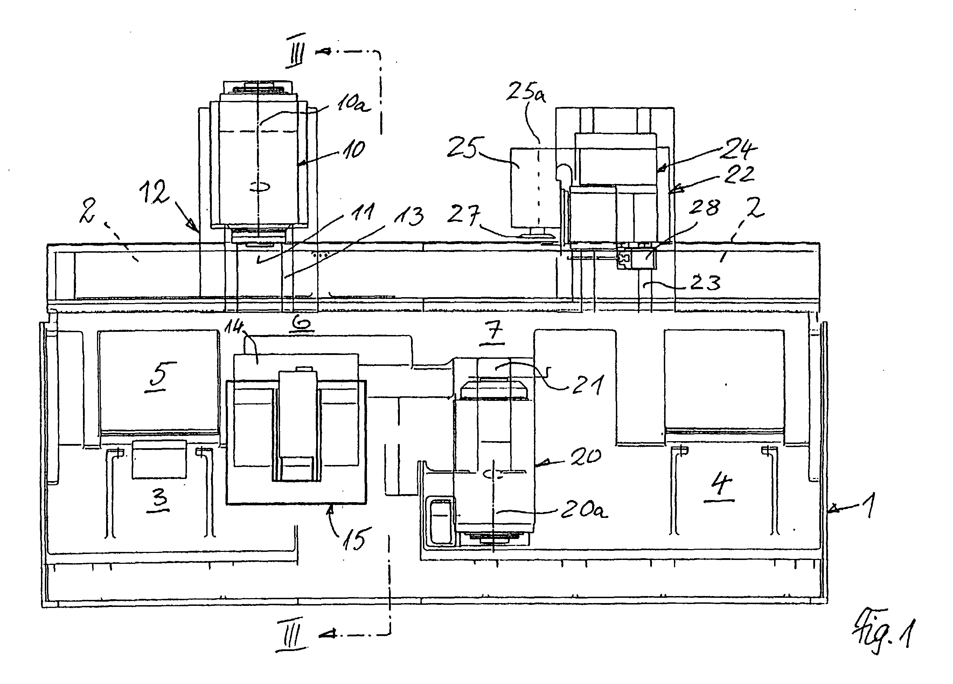

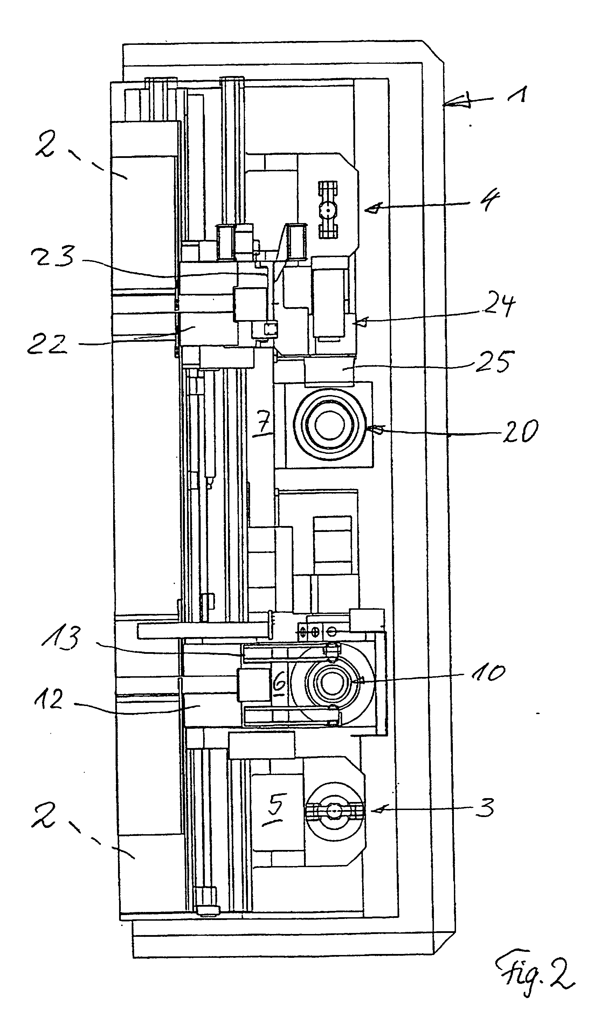

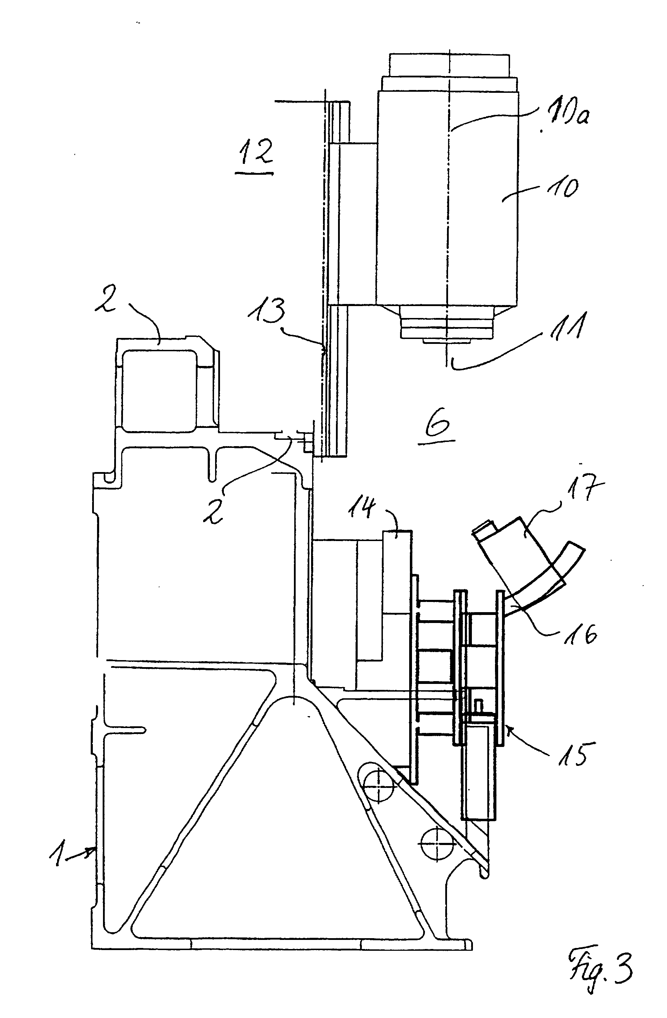

Fig. 1 bis 3 zeigen eine Drehmaschine, wie sie in den Grundzügen aus der DE 43 16 166 A1 bekannt ist. Eine Gehäuse- oder Rahmenkonstruktion 1 trägt ein Führungsbett 2 mit Führungen, die sich längs der Maschine erstrecken. Die Maschine weist ein Zuführende auf, an dem sich eine Zuführeinrichtung 3 befindet, und ein Abführende, an dem sich eine Entladeeinrichtung 4 befindet. Zwischen diesen beiden Enden sind eine Mess- und Ausrichtestation 5, eine erste Bearbeitungsstation 6 und eine zweite Bearbeitungsstation 7 angeordnet.

Die erste Bearbeitungsstation 6 umfasst einen Spindelkasten mit einer ersten, vertikal angeordneten Spindel 10, die um ihre Drehachse 10a motorisch antreibbar ist. Am unteren Ende der Spindel befinden sich Mittel 11 zum Greifen und Festspannen eines Werkstücks, wie es bekannt ist und nicht näher dargestellt ist. Ein erster Kreuzschlitten 12 ist auf dem Führungsbett 2 längs verfahrbar und weist eine vertikale Führung 13 auf, an welcher der Spindelkasten mit Spindel 10 vertikal verstellbar gelagert ist.

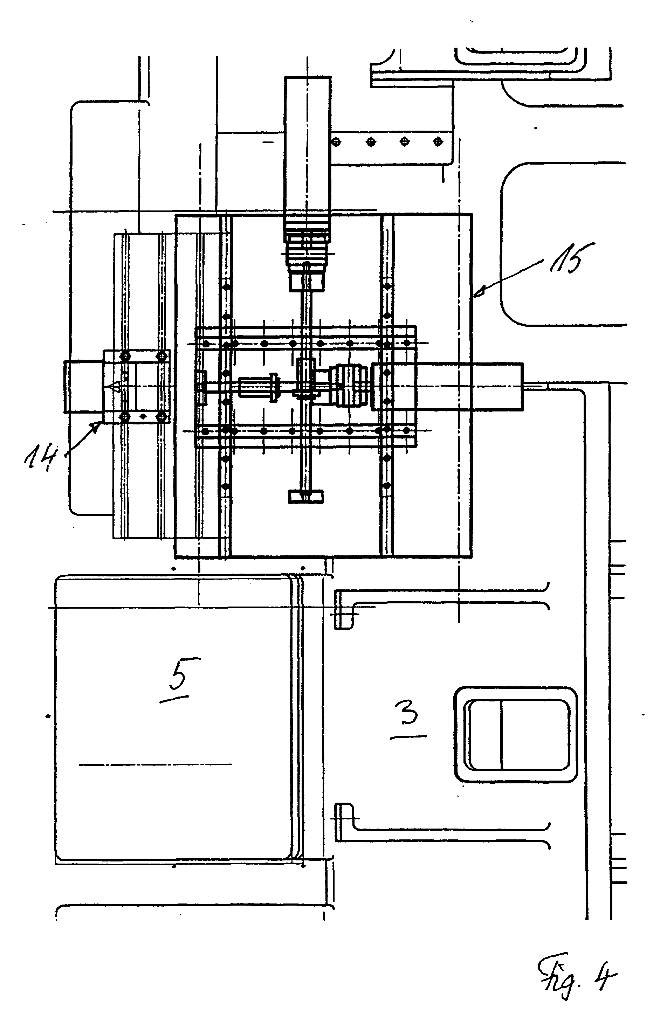

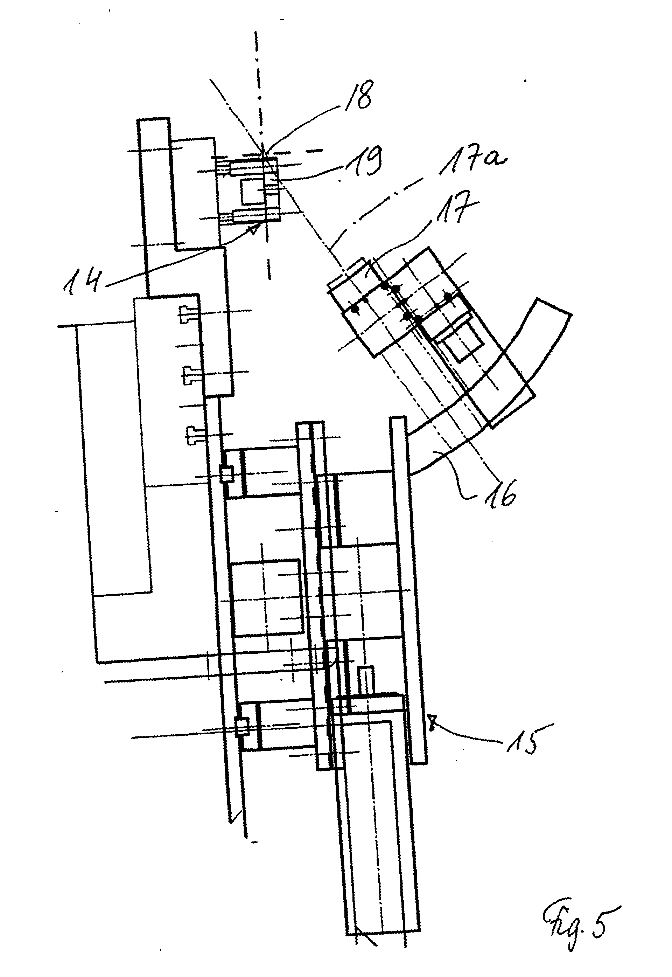

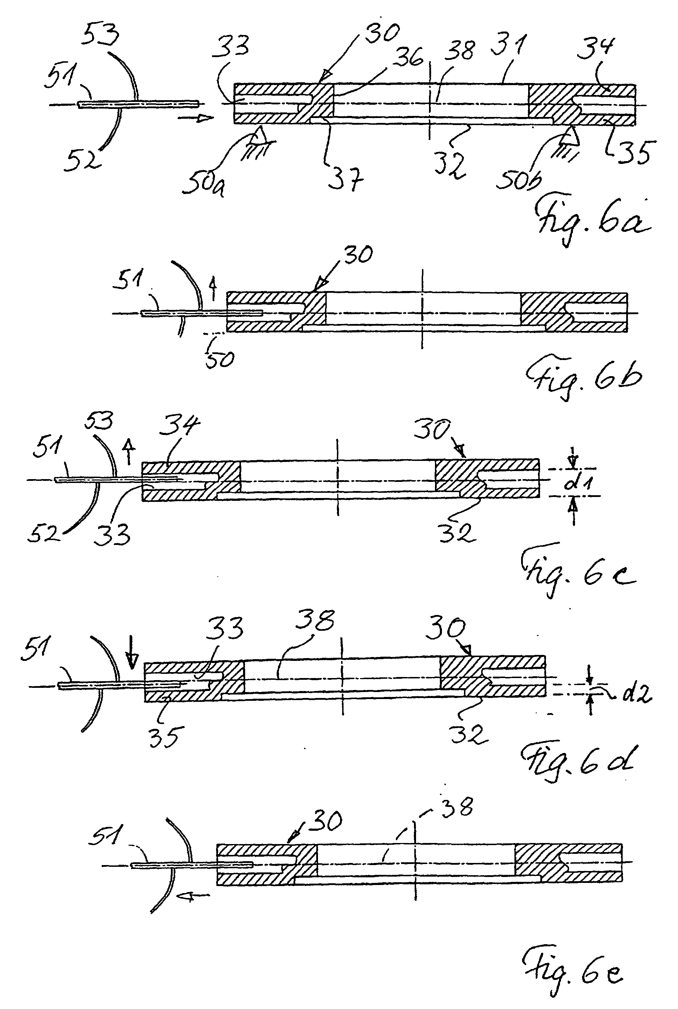

Zu der ersten Bearbeitungsstation 6 zählt noch ein Werkzeugträger 14, der auch als Werkzeugrevolver ausgebildet sein kann und ein Werkzeug 19 trägt bzw. in Wirkstellung bringt. Zusätzlich ist ein Kreuzschlitten 15 vorgesehen, auf welchem eine Schwenkeinrichtung 16 (Fig. 3) sitzt, um Abgabemittel 17 für einen Leistungslaserstrahl 17a zu führen. Der nicht dargestellte Leistungslaser ist über Glasfaserkabel mit den Abgabemitteln 17 verbunden, welche den Leistungslaserstrahl 17a auf eine eng begrenzte Aufheizstelle 18 (Fig. 5) des Werkstücks fokussieren, die der Einwirkungsstelle des Werkzeugs 19 eng benachbart ist. Die Entfernung zwischen Brennfleck und Einwirkungsstelle des Werkzeugs wird zu der Art des zu bearbeitenden Werkstücks bzw. dessen Werkstoff passend gewählt.

An der zweiten Bearbeitungsstation 7 (Fig. 1), unterhalb der Führungsbahn 2 ist ein zweiter Spindelkasten mit einer zweiten Spindel 20 angeordnet, deren Drehachse 20a senkrecht zur Führungsrichtung des Führungsbettes 2 ausgerichtet ist. Am oberen Ende der Spindel 20 sind Greif- und Festspannmittel 21 angeordnet, um jeweils ein Werkstück, welches durch entsprechende Steuerung des Kreuzschlittens 12 von den ersten Festspannmitteln 11 der ersten Spindel 10 herangetragen wird, zu übernehmen und festzuspannen.

Auf dem Führungsbett 2 sitzt ein weiterer Kreuzschlitten 22, der eine vertikale Führung 23 aufweist, um einen Schleifspindelträger 24 entsprechend verfahren zu können. Eine Schleifspindel 25 weist eine senkrecht verlaufende Drehachse 25a auf und trägt an ihrem Ende ein Schleifwerkzeug 27, welches zur Bearbeitung eines Werkstücks in der Bearbeitungsstation 7 verfahren werden kann. An dem Träger 24 ist ferner eine ausfahrbare Greifeinrichtung 28 angebracht, um ein fertiges Werkstück von der Spindel 20 zu entnehmen und der Austragsvorrichtung 4 zu übergeben.

Es können jeweils zwei Werkstücke die Werkzeugmaschine durchlaufen:
Ein erstes Werkstück, welches zugeführt, ausgemessen und in der ersten Werkstation 6 bearbeitet wird, und ein zweites Werkstück, das von der ersten Bearbeitungsstation übernommen, in der zweiten Bearbeitungsstation bearbeitet und von der Austragseinrichtung ausgetragen wird.

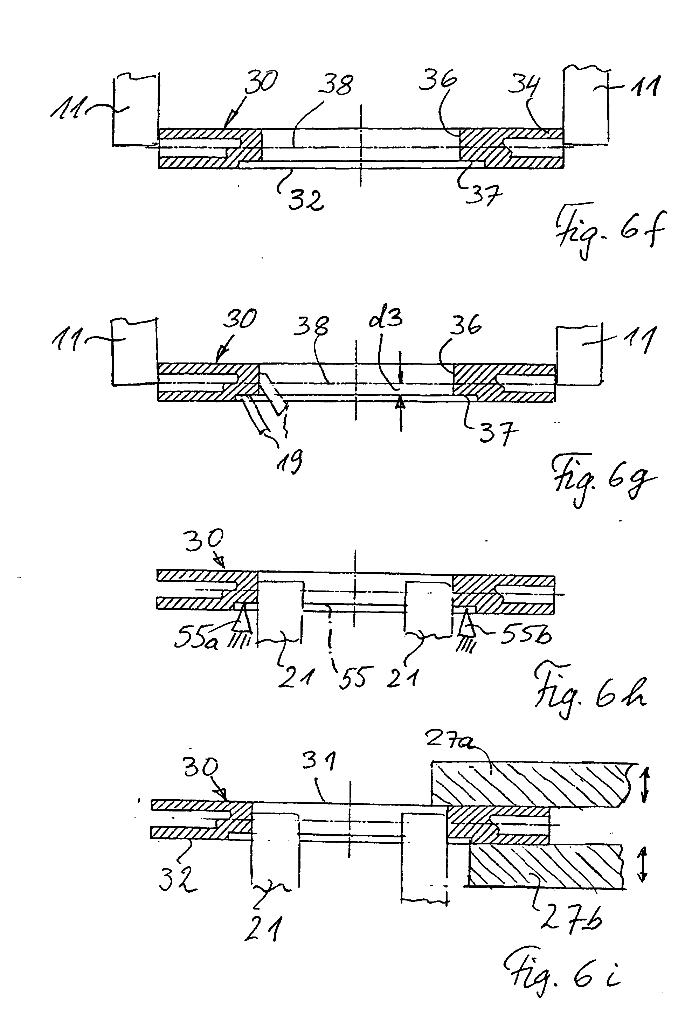

Der Betriebsablauf wird anhand der Bearbeitung einer Bremsscheibe 30 (Fig. 6a bis Fig. 6i) beschrieben, die aus einem spröden Werkstoff, nämlich faserverstärktem Kohlenstoff-Silicium, besteht.

Die Zuführmittel 3 fördern das Werkstück 30 in die Messeinrichtung 5 gegen eine Anschlagsebene 50, die eine erste Bezugsfläche darstellt und die durch drei Anschläge bestimmt wird, von denen wenigstens zwei Anschläge 50a, 50b verstellbar sind, um die Ebene 50 ausrichten zu können.

Die Bremsscheibe 30 weist eine Oberseite 31, eine Unterseite 32, gebogene Nuten oder eine umlaufende Aussparung 33, obere und untere Wände 34, 35, eine mittlere Bohrung 36 und eine Aussparungsfläche 37 auf. Die Wände 34 und 35 sollen bei der fertig bearbeiteten Bremsscheibe gleich dick sein, um die gleiche Wärmekapazität aufzuweisen, damit sich diese Wände bei der Aufheizung an den Bremsflächen 31 und 32 gleich stark erwärmen, damit die Bremsscheibe keine Tendenz des Verziehens aufweist. Das Werkstück wird deshalb ausgemessen, um die sogenannte Toleranz-Bezugsebene 38 aufzufinden, die symmetrisch zu der umlaufenden Aussparung bzw. den gebogenen Nuten 33 verläuft. Die Messeinrichtung 5 weist zu diesem Zweck einen Taster 51 auf, der als Näherungsschalter ausgebildet ist, d. h. bei Annäherung an die obere oder untere Begrenzungsfläche der Nuten oder der Aussparung 33 einen Schaltvorgang auslöst. Im vorliegenden Fall ist der Taster 51 als pneumatisch arbeitender Taster ausgebildet, dem ein Luftstrom über einen Schlauch 52 zugeführt wird, der an einer Tastöffnung (nicht dargestellt) austritt. Eine Druckabtastleitung 53 ist mit einem Schalt-Messelement verbunden und misst den Druck hinter der Tastöffnung. Wenn eine Wand den Luftstromquerschnitt stark verengt, nimmt der Druck hinter dieser "Düse" zu, und ein Schaltvorgang wird ausgelöst.

Der Taster 51 wird zunächst radial in die Aussparung oder Nut 33 eingeführt (Fig. 6b) und dann nach oben verfahren (Fig. 6c). Bei Annäherung des Tasters 51 an die Wand 34 erhöht sich der gemessene Druck, und das Schalt-Messelement schaltet. Das Maß der Entfernung d1 der Wand 34 von der Bezugsebene 50 bzw. der Unterseite 32 des Werkstücks wird dem Computer der Werkzeugmaschine zugeführt. Anschließend (Fig. 6d) wird der Taster 51 in Richtung auf die Wand 35 verschoben, bis das Schalt-Messelement schaltet, wodurch das Maß d2 ermittelt wird, welches ebenfalls in den Computer eingegeben wird. Anschließend (Fig. 6e) wird der Taster 51 zurückgezogen, so dass die Ränder der Wände 34 und 35 frei werden. Dieser Vorgang wird am Umfang des Werkstückes x-mal wiederholt. Dies geschieht durch Verdrehen des Werkstückes in der Meßstation 5, mindestens jedoch 3 mal. Aus den ermittelten Werten d₁ und d₂ ergibt sich eine räumliche Ausgleichsebene 38, die nach Erfahrungswerten immer schief im Raum liegen wird.

Das Werkstück wird darum mit Hilfe der verstellbaren Anschläge oder Auflagen 50a, 50b zum Maschinenkoordinatensystem ausgerichtet, so dass die Ausgleichsebene 38 parallel zum Werkstücktisch bzw. senkrecht zur Spindelachse 10a verläuft.

Die erste Spindel 10 fährt mit ihrer Greif- und Festspanneinrichtung 11 zu dem Werkstück 30 hin und ergreift es an den Rändern der Wand 34 (Fig. 6f), wobei die axiale Fahrlänge der Spindel 10 entlang der Achse 10a genau auf die Stellung der Ebene 38 angepasst wird. Mit anderen Worten, wenn das Werkstück 30 an der Spindel 10 fest gemacht wird, sind die räumlichen Koordinaten der Fläche 32 in jeglicher Fahrstellung der Spindel 10 im Rechner bekannt.

Fig. 6g zeigt die Bearbeitung der Flächen 36 und 37. Zu diesem Zweck wird die Spindel 10 mittels des Kreuzschlittens 12 zu dem ersten Werkzeug 19 hin gefahren, wobei das Werkstück 30 durch die Spindel 10 in Drehung versetzt und gleichzeitig der Laserstrahl auf die eng begrenzte Stelle 18 des Werkstücks gerichtet wird (Fig. 5). Die Stelle 18 ist etwas von der Einwirkungsstelle des Werkzeugs entfernt, und zwar in Drehrichtung des Werkstücks vor der Bearbeitungsstelle durch das Werkzeug. Mit dem Laserstrahl kann das Werkstück örtlich begrenzt sehr stark aufgeheizt werden, so dass es seine Härte und Sprödigkeit an der Bearbeitungsstelle verliert und von einem Meißel bearbeitet werden kann, der beispielsweise mit einem Industriediamanten bestückt ist. Die Führung des Werkzeugs 19 gegenüber dem Werkstück 30 ist an sich bekannt und bedarf keiner näheren Beschreibung. Ferner ist es für den Fachmann kein Problem, den Kreuzschlitten 15 und die Schwenkeinrichtung 16 so anzutreiben, dass die Laserstrahl-Abgabemittel 17 richtig gelenkt werden, d.h. dass die begrenzte, aufgeheizte Stelle 18 immer nahe und in Drehrichtung vor der Bearbeitungsstelle des Werkzeuges 19 zu liegen kommt.

Mit der Herstellung der bearbeiteten Fläche 37 gibt es eine zweite Bezugsebene, die ein genau vorgeschriebenes Maß d3 zu der Toleranz-Bezugsebene 38 einnimmt, so dass das Werkstück 30 umgespannt werden kann (Fig. 6h), ohne dass der räumliche Bezug des Werkstücks zu den Koordinaten der Maschine verloren geht. Mit anderen Worten, das Werkstück 30 kann an der Vertikalspindel 20 mit Anlage der bearbeiteten Fläche 37 an einer z.B. durch Anschläge 55a, 55b gebildeten Bezugsfläche 55 festgespannt werden, wobei die bearbeiteten Flächen 36 zum Angriff der Festspannmittel 21 verwendet werden können. Die räumliche Stellung der Toleranz-Bezugsebene 38 zur Drehachse 20a ist somit genau festgelegt und in dem Computer der Maschine bekannt. Gleichzeitig sind die Flächen 31 und 32 zur Bearbeitung frei und werden mit einem Schleifwerkzeug 27 bearbeitet (Fig. 1), welches im vorliegenden Fall (Fig. 6i) aus zwei parallelen Schleifscheiben 27a, 27b gebildet wird, die unabhängig voneinander gesteuert werden können.

Nach Fertigbearbeitung des Werkstücks 30 wird das Werkstück an die Austragseinrichtung 4 (Fig. 1) übergeben, welche das fertige Werkstück auf ein Fließband oder dergleichen ablegt.

Anstelle der Bearbeitung von Bremsscheiben können auch andere Formen von Werkstücken bearbeitet werden. In einem solchen Fall wird die Art des Messens am Werkstück diesem angepasst, um jeweils die Toleranz-Bezugsebene des Werkstücks zu ermitteln. Anschließend wird das Werkstück so an der ersten Spindel 10 festgespannt, dass gewisse vorgesehene Flächen bearbeitet werden können, von denen eine Fläche als Bezugsfläche beim Umspannen auf die zweite Spindel 20 dienen kann. Anschließend wird das Werkstück fertig bearbeitet, wobei die Wahl des Werkzeugs an die Art der Bearbeitung angepasst wird.

### Bezugszeichenliste:

- 1: Rahmenkonstruktion
- 2: Führungsbett
- 3: Zuführeinrichtung
- 4: Entladeeinrichtung
- 5: Ausrichtestation
- 6: Erste Bearbeitungsstation
- 7: Zweite Bearbeitungsstation

- 10: Erste Spindel (vertikal angeordnet)
- 10 a: Drehachse zu 10
- 11: Greif- und Festspannmittel
- 12: Erster Kreuzschlitten
- 13: Vertikale Führung von 12
- 14: Werkzeugträger
- 15: Kreuzschlitten
- 16: Schwenkeinrichtung an 15
- 17: Abgabemittel
- 17 a: Leistungslaserstrahl
- 18: Aufheizstelle
- 19: Werkzeug an 14
- 20: Zweite Spindel
- 20 a: Drehachse zu 20
- 21: Greif- und Festspannmittel
- 22: Kreuzschlitten auf 2
- 23: Vertikale Frührung von 22
- 24: Schleifspindelträger
- 25: Schleißspindel
- 25 a: Drehachse (senkrecht verlaufend) an 25
- 27: Schleifwerkzeug
- 27 a: Schleifscheibe
- 27 b: Schleifscheibe
- 28: Greifarm

- 30: Bremsscheibe (als Werkstück)
- 31: Oberseite von 30
- 32: Unterseite von 30
- 33: Aussparung an 30
- 34: Untere Wand
- 35: Untere Wand
- 36: Mittlere Bohrung
- 37: Aussparungsfläche
- 38: Toleranz-Bezugsebene

- 50: Anschlagsebene
- 50 a: Anschlag
- 50 b: Anschlag
- 51: Taster an 5
- 52: Schlauch
- 53: Druckabtastleitung
- 55 a: Anschlag
- 55 b: Anschlag

- d1: Entfernung zwischen 34 und 50 bzw. 32
- d2: Entfernung zwischen 35 und 50 bzw. 32
- d3: Entfernung zwischen 37 und 38

## Patentansprüche

1. Verfahren zur Bearbeitung von Werkstücken, insbesondere Bremsscheiben aus faserverstärktem Kohlenstoff-Silicium, mit folgenden Schritten:
jeweils ein Werkstück (30) wird einer zerspanenden Werkzeugmaschine zugeführt, um eine Messstellung einzunehmen;
das Werkstück (30) wird in der Messstellung hinsichtlich gewisser Abmessungen (d1, d2) ausgemessen, um eine Toleranz-Bezugsebene (38) an dem Werkstück (30) zu ermitteln, und das Werkstück wird ausgerichtet;
das Werkstück (30) wird an einer ersten Spindel (10) festgespannt, die eine erste Drehachse (10a) definiert, wobei die Toleranz-Bezugsebene (38) senkrecht zur Drehachse (10a) steht und eine vorbestimmte axiale Stellung zur Drehachse einnimmt;
erste freie Rotationsoberflächen (36, 37) des Werkstücks (30) werden spanabhebend bearbeitet, um eine bearbeitete Bezugsebene (37) und eine Rotationsfestspannoberfläche (36) zu schaffen;
das Werkstück (30) wird an einer zweiten Spindel (20) festgespannt, die eine zweite Drehachse (20a) definiert, wobei das Werkstück (30) an der bearbeiteten Bezugsebene (37) anliegt und die Festspannung an der bearbeiteten Rotationsfestspannoberfläche (36) erfolgt;
zweite freie Rotationsoberflächen (31, 32) werden spanabhebend bearbeitet, um Werkstückarbeitsflächen zu bilden.

2. Verfahren nach Anspruch 1,
**dadurch gekennzeichnet, dass** die ersten freien Rotationsoberflächen (36, 37) des Werkstücks an einer eng begrenzten Stelle (18) von einem Leistungslaserstrahl (17a) aufgeheizt und durch ein nachfolgendes Werkzeug (19) spanabhebend bearbeitet werden.

3. Verfahren nach Anspruch 1 oder 2,
**dadurch gekennzeichnet, dass** die zweiten freien Rotationsoberflächen (31, 32) von Schleifmitteln (27) bearbeitet werden.

4. Vorrichtung zur Durchführung des Verfahrens nach einem der Ansprüche 1 bis 3, mit einer Werkzeugmaschine, die ein Maschinen-Koordinatensystem aufweist, mit
einer ersten Spindel (10), die Mittel (11) zum Greifen und Festspannen eines Werkstücks (30) aufweist und um eine erste Drehachse (10a) rotierend antreibbar ist;
einem ersten Kreuzschlitten (12) zum Verfahren der ersten Spindel (10) in Richtung und quer zur ersten Drehachse (10a), um die Greif- und Festspannmittel (11) in Position zum Greifen und Festspannen des Werkstücks (30) und in Bearbeitungsposition zu fahren;
einem ersten Werkzeugträger (14), der wenigstens ein erstes Werkzeug (19) trägt;
einer zweiten Spindel (20), die rotierend um die zweite Drehachse (20a) antreibbar ist, in Reichweite des ersten Kreuzschlittens (12) angeordnet ist und zweite Greif- und Festspannmittel (21) aufweist, um das Werkstück (30) von der ersten Spindel (10) zu übernehmen und festzuspannen;
Mitteln (22) zur Relativverschiebung zwischen zweiter Spindel (20)und Werkzeugmitteln (25, 27), um das Werkstück (30) zu bearbeiten; und
Mitteln (28) zum Greifen des an der zweiten Spindel (20) sitzenden Werkstücks (30) und Übergeben an eine Austragseinrichtung (4),
**gekennzeichnet durch** folgende Merkmale:
Mittel (3) zur Zuführung jeweils eines Werkstücks (30) in eine Messstellung an einer Anschlagsfläche (50) ;
eine Messeinrichtung (5) zur Bestimmung von Abmessungen (d1, d2) an dem Werkstück (30), die mit einem Rechner verbunden ist, der die Toleranz-Bezugsebene (38) relativ zur Anschlagsfläche (50) bzw. einer ersten Bezugsfläche (32) des rohen Werkstücks (30) bestimmt;
Mittel (50a, 50b) zum Ausrichten des Werkstückes (30) derart, dass die Toleranz-Bezugsebene (38) eine vorgegebene Position zum Maschinen-Koordinatensystem einnimmt;
drehbare Schleifwerkzeugmittel als Werkzeugmittel (25, 27), die eine dritte Drehachse (25a) definieren.

5. Vorrichtung nach Anspruch 4,
**dadurch gekennzeichnet, dass** der Werkzeugträger (14) Mittel (17) zur Abgabe eines Leistungslaserstrahls (17a) auf eine eng begrenzte und dadurch aufgeheizte Stelle (18) des Werkstücks (30) aufweist, welches zufolge der ersten Spindel (10) rotiert, so dass das erste Werkzeug (19) einen Span von dem Werkstück nahe der begrenzten, aufgeheizten Stelle (18) abhebt;

6. Vorrichtung nach Anspruch 4 oder 5,
**dadurch gekennzeichnet, dass** die Messeinrichtung (5) einen Taster (51) umfasst, der in Annäherung an Oberflächen des Werkstücks (30) verfahrbar ist und einen Schalter aufweist, der bei der Annäherung die Koordinaten der Fahrstrecke an den Rechner der Werkzeugmaschine weiter gibt.

7. Vorrichtung nach Anspruch 6,
**dadurch gekennzeichnet, dass** die Ausrichtemittel (50a, 50b) des Werkstückes vom Rechner der Werkzeugmaschine gesteuerte, motorisch verfahrbare Anschläge darstellen.

8. Vorrichtung nach Anspruch 4, zur Durchführung des Verfahrens nach Anspruch 2
**dadurch gekennzeichnet, dass** eine Nachführeinrichtung in Form eines verfahrbaren Schlittens (15) und einer Schwenkeinrichtung (16) vorgesehen ist, um die Abgabemittel (17) des Leistungslaserstrahls (17a) zu führen und auf die eng begrenzte, aufzuheizende Stelle (18) des Werkstücks (30) auszurichten.

## Claims

1. A method for machining of workpieces, particularly brake disks made of fiber-reinforced carbon silicon, comprised of the following methodical steps:
one workpiece (30) each is supplied to a metal-cutting machine tool to take a measuring position;
the workpiece (30) is measured in the measuring position for certain dimensions (d1, d2) to determine a tolerance reference plane (38) at the workpiece (30), and the workpiece is aligned;
the workpiece (30) is firmly clamped at a first spindle (10) which defines a first axis of rotation (10a), wherein the tolerance reference plane (3) stands vertically to the axis of rotation (10a) and takes a pre-defined axial position to the axis of rotation;
first free rotation surfaces (36, 37) of the workpiece (30) are subjected to metal cutting machining to create a machined reference plane (37) and a rotational firmly-clamped surface (36);
the workpiece (30) is firmly clamped at a second spindle (20) which defines a second axis of rotation (20a), wherein the workpiece (30) adjoins the machined reference plane (37) and wherein the firm clamping is accomplished at the machined rotational firm-clamping surface (36).
second free rotation surfaces (31, 32) are subjected to metal-cutting machining to create workpiece working surfaces.

2. A method pursuant to Claim 1, **characterized in that** the first free rotational surfaces (36, 37) of the workpiece are reheated at a narrowly confined place (18) by a power laser beam (17a) and machined by metal-cutting, using another tool (19) further downstream.

3. A method pursuant to Claim 1 or 2, **characterized in that** the second free rotational surfaces (31, 32) are machined by grinding means (27).

4. A device for execution of the method pursuant to any one of Claims 1 to 3, applying a machine tool provided with a machine coordinate system, comprised of:
a first spindle (10) provided with means (11) for gripping and firmly clamping a workpiece (30) and which can be driven in rotation d by a first axis of rotation (10a), and furthermore provided with a first cross sledge (12) for moving the first spindle (10) towards and transversely to the first axis of rotation (10a) to move the gripping and firm-clamping means (11) into a position allowing for gripping and firm-clamping of the workpiece (30) and into the machining position, and furthermore provided with a first tool carrier (14) which at least carries a first tool (19);
a second spindle (20) that can be driven in rotation around the second axis of rotation (20a), located at arm's length of the first cross ledge (12) and provided with second gripping and firm-clamping means (21) to take-over the workpiece (30) from the first spindle (10) and to clamp it firmly;
means (22) for relative shifting between the second spindle (20) and the tool means (25, 27) to machine the workpiece (30); and
means (28) for gripping the workpiece (30) sitting at the second spindle (20) and transferring it to a discharging device (4);
**characterized by** the following features:
means (3) for feeding one workpiece (30) each into a measuring position at an arrest surface (50); a measuring device (5) to determine dimensions (d1, d2) at the workpiece (30), said measuring device being linked to a computer that determines the tolerance reference plane (38) relatively to the arrest surface (50) and/or a first reference surface (32) of the rough workpiece (30);
means (50a, 50b) for alignment of the workpiece (30) in such a manner that the tolerance reference plane (38) takes a pre-defined position versus the machine coordinate system;
rotating grinding tool means as tools (25,27) which define a third axis of rotation (25a).

5. A device pursuant to Claim 4, **characterized in that** the tool carrier (14) is provided with means (17) to dispense a power laser beam (17a) to a narrowly confined and thus reheated place (18) of the workpiece (30) which rotates due to the first spindle (10) so that the first tool (19) cuts-off a chip from the workpiece near the confined, reheated place (18).

6. A device pursuant to Claim 4 or 5, **characterized in that** the measuring device (5) is comprised of a scanner (51) which can be moved in approximation to the surfaces of the workpiece (30) and provided with a switch which, when approaching, communicates the coordinates of the travel distance to the computer of the machine tool.

7. A device pursuant to Claim 6, **characterized in that** the alignment means (50a, 50b) of the tool represent motor-adjustable arrests that are controlled by the computer of the machine tool.

8. A device pursuant to Claim 4 for execution of the method pursuant to Claim 2, **characterized in that** a feed-forward device in form of a mobile sledge (15) and a swivel device (16) is provided for in order to guide the dispensing means (17) of the power laser beam (17a) and to align these means to the narrowly confined reheatable place (18) of said workpiece (30).

## Revendications

1. Procédé pour l'usinage de pièces, en particulier de disques de frein en silicium de carbure renforcé par fibres avec les étapes suivantes :
une pièce (30) est amenée sur une machine-outil travaillant par enlèvement de copeaux pour prendre une position de mesure ;
la pièce (32) est mesurée en position de mesure pour certaines mesures (d1, d2) pour déterminer un plan de référence de tolérance (38) sur la pièce (30), et la pièce est allgnée ;
la pièce (30) est serrée sur une première broche (10) qui définit un premier axe de rotation (10a), le plan de référence de tolérance (38) étant vertical par rapport à l'axe de rotation (10a) et prenant une position axiale prédéterminée par rapport à l'axe de rotation ;
les premières surfaces de rotations libres (36, 37) de la pièce (30) sont usinées par enlèvement de copeaux pour créer un plan de référence usiné (37) et une surface de serrage de rotation (36) ;
la pièce (30) est serrée sur une deuxième broche (20) qui définit un deuxième axe de rotation (20a), la pièce (30) appuyant au plan de référence usiné (37) et le serrage ayant lieu à la surface de serrage de rotation (36) ;
les deuxièmes surfaces de rotation libres (31, 32) sont usinées par enlèvement de copeaux pour constituer des surfaces de serrage de rotation.

2. Procédé selon la revendication 1,
**caractérisé en ce que** les premières surfaces libres de rotation (36, 37) de la pièce sont échauffées à un point étroitement limité (18) par un rayon laser de puissance (17a) et usinées par enlèvement de copeaux par un outil suivant (19).

3. Procédé selon la revendication 1 ou 2,
**caractérisé en ce que** les deuxièmes surfaces libres de rotation (31, 32) sont usinées par des outils de meulage (27).

4. Dispositif pour la réalisation du procédé selon une des revendications 1 à 3, avec une machine-outil qui présente un système de coordonnées de machine, avec une première broche (10) qui possède des dispositifs (11) pour la prise et le serrage d'une pièce (30) et qui peut être entraînée en tournant autour d'un premier axe de rotation (10a) ;
un premier chariot porte-outil à mouvements croisés (12) permettant le déplacement de la première broche (10) dans le sens du premier axe de rotation (10a) et transversalement à ce dernier pour amener les dispositifs de prise et de serrage (11) en position de prise et de serrage de la pièce (30) et en position d'usinage ; un premier porte-outil (14) qui porte au moins un premier outil (19) ;
une deuxième broche (20) qui peut être entraînée en tournant autour du deuxième axe de rotation (20a), qui est disposée à portée du premier chariot (12) porte-outil à mouvements croisés et présente des deuxièmes dispositifs de prise et de serrage (21) pour prendre la pièce (30) de la première broche (10) et la serrer ; des outils de meulage rotatifs (25, 27) en tant qu'outils qui définissent un troisième axe de rotation (25a) ;
des dispositifs (22) pour le décalage relatif entre la deuxième broche (20) et les outils (25, 27) permettant l'usinage de la pièce (30) ;
et des dispositifs (28) pour la prise de la pièce (30) qui se trouve sur la deuxième broche (20) et la transmission à un dispositif d'évacuation (4),
**caractérisé par** les caractéristiques suivantes :
dispositifs (3) pour l'amenée d'une pièce (30) en une position de mesure à une surface de butée (50) ;
un dispositif de mesure (5) permettant de déterminer les mesures (d1, d2) sur la pièce (30), ledit dispositif de mesure étant connecté à un ordinateur qui détermine le plan de référence de tolérance (38) par rapport à la surface de butée (50) ou à une première surface de référence (32) de la pièce brute (30) ;
des dispositifs (50a, 50b) permettant l'alignement de la pièce (30) de manière à ce que le plan de référence de tolérance (38) prenne une position prédéfinie par rapport au système de coordonnées de la machine ;

5. Dispositif selon la revendication 4,
**caractérisé en ce que** le porte-outil (14) possède des dispositifs (17) pour l'émission d'un rayon laser de puissance (17a) sur un point étroitement limité et ainsi échauffé (18) de la pièce (30) qui tourne autour de la première broche (10) de manière telle que le premier outil (19) enlève un copeau de la pièce près du point limité et échauffé (18).

6. Dispositif selon la revendication 4 ou 5,
**caractérisé en ce que** le dispositif de mesure (5) comprend un bouton-poussoir (51) qui se déplace lorsqu'il approche des surfaces de la pièce (30) et qui possède un contacteur qui, lors de l'approche, transmet les coordonnées du parcours à l'ordinateur de la machine-outil.

7. Dispositif selon la revendication 6,
**caractérisé en ce que** les dispositifs d'alignement (50a, 50b) de la pièce présentent des butées commandées par l'ordinateur de la machine-outil et déplacées par moteur.

8. Dispositif selon la revendication 4 pour la réalisation du procédé suivant la revendication 2,
**caractérisé en ce qu'**un dispositif d'alimentation ultérieure sous forme de chariot porte-outil mobile à mouvements croisés (15) et d'un dispositif d'orientation (16) est prévu pour guider les dispositifs d'émission du rayon laser de puissance (17a) et le diriger sur le point étroitement limité à chauffer (18) de la pièce (30).
